# EUROPEAN PATENT SPECIFICATION

(11) **EP 3 875 988 B1**
(45) Date of publication and mention of the grant of the patent: **16.07.2025**
(21) Application number: 19878424.1
(22) Date of filing: 24.09.2019
(51) Int. Cl.: G01S 15/96, G01B 17/00, A01K 29/00, A01K 61/60, G01S 7/539

(54) **TARGET MEASUREMENT APPARATUS AND TARGET MEASUREMENT METHOD**
ZIELMESSVORRICHTUNG UND ZIELMESSVERFAHREN
APPAREIL ET PROCÉDÉ DE MESURE DE CIBLE

(30) Priority: 29.10.2018 JP 2018203120
(43) Date of publication of application: 08.09.2021
(73) Proprietor: FURUNO ELECTRIC CO., LTD., Nishinomiya-City, Hyogo 662-8580 (JP)
(72) Inventor: ITO, Masanori, Nishinomiya-City, Hyogo 6628580 (JP)
(74) Representative: Cleveland Scott York
(86) International application number: PCT/JP2019/037226
(87) International publication number: WO 2020/090287

(56) References cited:
- WO-A1-2016/002776
- WO-A1-2017/159639
- JP-A- 2001 116 833
- JP-A- 2005 189 140
- JP-A- 2008 267 834
- JP-A- 2011 052 990
- JP-A- 2011 052 990
- JP-A- 2015 104 498
- US-A1- 2008 080 317
- US-A1- 2016 306 033
- US-B1- 6 325 020
- ITO MASANORI ET AL: "Target strength spectra of tracked individual fish in schools", FISHERIES SCIENCE, JAPANESE SOCIETY OF SCIENTIFIC FISHERIES, JP, vol. 81, no. 4, 29 May 2015 (2015-05-29), pages 621 - 633, XP035514555, ISSN: 0919-9268, [retrieved on 20150529], DOI: 10.1007/S12562-015-0890-7

## Description

The present disclosure mainly relates to a target object measuring device.

Conventionally, a target object measuring device capable of calculating a fish length etc. of a fish (a length of the fish) is known. Patent Document 1 discloses this kind of target object measuring device.

The target object measuring device of EP3086137A1 (Patent Document 1) can acquire a target strength of a fish by using a transducer and calculate the fish length based on the acquired target strength.

However, in a situation where the density of fish is high, a reflection wave generated from a swim bladder of the fish which is a measurement target may be blocked by reflection waves generated from swim bladders of different fish from the fish. Therefore, according to the configuration of Patent Document 1 described above, the target strength of the target fish may not be able to be acquired with sufficient accuracy. As a result, an improvement in the calculation accuracy of the fish length is limited, and there is room for an improvement in this regard.

The present disclosure is made in view of the above situation, and one purpose thereof is to provide a target object measuring device and a method of measuring a target object, capable of accurately calculating the size and/or the weight of an underwater target object by utilizing a transducer.
JP2011-052990 discloses an underwater detection device and a kind-of-fish discrimination method for determining the kind of fish swimming in the water. The envelope of a reflection signal from a simple fish is roughly divided into a reflected wave from its air bladder whose intensity of reflection is the highest, and reflected waves from the parts other than the bladder. By paying attention to the matter that the reflected waves from the parts other than the air bladder are different depending on the kind of the fish, the kind of the fish of a detection object is discriminated on the basis of information on a peak having the largest amplitude value of the envelope detected from the reflection signal of the detection object, and a peak existing before and after the peak.

The problem to be solved by the present disclosure is as described above, and measures to solve the problem and effects thereof are described as follows.

According to one aspect of the present invention there is provided a target object measuring device as defined in claim 1. The target object measuring device includes a transducer, a target object echo signal extracting module, a peak detecting module, a peak incoming direction calculating module, a time difference calculating module, and a target object measuring module. The transducer transmits a transmission wave underwater and receives a reflection wave. The target object echo signal extracting module extracts an echo signal indicative of a target object from data of the reflection wave. The peak detecting module detects each of a plurality of peaks included in the echo signal. The peak incoming direction calculating module calculates an incoming direction of each of the plurality of peaks based on the reflection wave. The time difference calculating module calculates a time difference between a timing of appearance of a first peak and a second peak different from the first peak, among the plurality of peaks, a difference in the incoming direction between the first peak and the second peak being smaller than a given threshold. The target object measuring module calculates data related to a size and/or a weight of the target object based on the time difference.

According to this, since the size and weight of the target object are calculated based on the difference in the timing between the peaks which come from substantially the same direction and are highly possibly acquired from the same target object, even if the density of the target object is high, the accurate data related to the target object can be calculated.

In the target object measuring device, preferably, the time difference calculating module detects a maximum peak at which an echo intensity is the maximum, among the plurality of peaks included in the echo signal, and calculates the time difference between a time when the maximum peak, as the first peak, appears and a time when the second peak appears.

According to this, since the first peak having the maximum echo intensity is used among the plurality of peaks having a high possibility of being acquired from the same target object, the calculation accuracy of the size and weight of the target object can be improved.

The target object measuring device has the following configuration. That is, the time difference calculating module generates a histogram based on the time difference calculated for a plurality of the echo signals. The target object measuring module calculates the data related to the size and/or the weight of the target object based on the histogram.

According to this, since the histogram based on the time difference between the acquired time of the first peak and the acquired time of the second peak is used for the calculation of the size and weight of the target object, statistical validity can be given to the calculated size and weight of the target object.

The target object measuring device preferably has the following configuration. That is, the histogram is a histogram indicative of a relation between bins of the time difference and a frequency. The target object measuring module calculates the data related to the size and/or the weight of the target object based on a distribution of the histogram in which the second peak appears only earlier than the timing of the first peak, or a distribution of the histogram in which the second peak appears only later than the timing of the first peak.

According to this, when a structural feature is located in the target object on the side closer to or farther from the transducer than a reflection source of the first peak, by relatively emphasizing the feature, the calculation accuracy of the size and weight of the target object can be improved.

In the target object measuring device, preferably, the target object measuring module calculates the data related to the size and/or the weight of the target object based on a time difference corresponding to a mode appearing in the histogram.

According to this, since the time difference at a part with high frequency is used, the size and weight of the target object can be accurately calculated.

In the target object measuring device, preferably, the target object measuring module calculates the data related to the size and/or the weight of the target object based on a time difference corresponding to an edge appearing in the histogram.

According to this, since the time difference at a substantial boundary of the distribution is used, the size and the weight of the target object can be accurately calculated.

The target object measuring device preferably has the following configuration. That is, the transducer has four or more receiving channels for receiving the reflection wave. The peak incoming direction calculating module calculates the incoming direction based on a difference between timings at which the receiving channels receive the reflection wave.

According to this, based on split-beam method, the incoming direction of the peak can be accurately calculated.

The target object measuring device may have the following configuration. That is, the transducer has two receiving channels for receiving the reflection wave. The peak incoming direction calculating module calculates the incoming direction based on a difference between intensities of the reflection wave received by the receiving channels.

According to this, the incoming direction of the peak can be easily calculated based on dual-beam method.

In the target object measuring device, preferably, the target object is fish raised in a fish farm.

According to this, the size and weight of the fish raised in the fish farm can be suitably measured.

In the target object measuring device, preferably, the target object measuring module calculates the data related to at least one of a fish height, a fish length, a fish width, and a fish weight.

According to this, the data related to a growth state etc. of the fish raised in the fish farm can be obtained with high accuracy.

According to another aspect of the present invention there is provided a method of measuring a target object as defined in claim 10. The method includes transmitting a transmission wave underwater, receiving a reflection wave, extracting an echo signal indicative of a target object from data of the reflection wave, detecting each of a plurality of peaks included in the echo signal, calculating an incoming direction of each of the plurality of peaks based on the reflection wave, calculating a time difference between a timing of appearance of a first peak and a second peak different from the first peak, among the plurality of peaks, a difference in the incoming direction between the first peak and the second peak being smaller than a given threshold, generating a histogram based on the time difference calculated for a plurality of the echo signals and calculating data related to a size and/or a weight of the target object based on the histogram.

Fig. 1 is a block diagram illustrating an electrical configuration of a growth condition measuring device according to one embodiment of the present disclosure.
Fig. 2 is a perspective view illustrating a situation in which the growth condition measuring device is used for a fish cage.
Fig. 3 is a graph illustrating examples of an echo signal which is a reflection of an ultrasonic wave on a fish.
Fig. 4 is a graph illustrating one example of a histogram which is utilized for a calculation of the size and the weight of fish.
Fig. 5 is a perspective view illustrating a case where wave reception timings of reflection waves of different fish overlap.
Fig. 6 is a flowchart illustrating one example of a process flow of the growth condition measuring device.

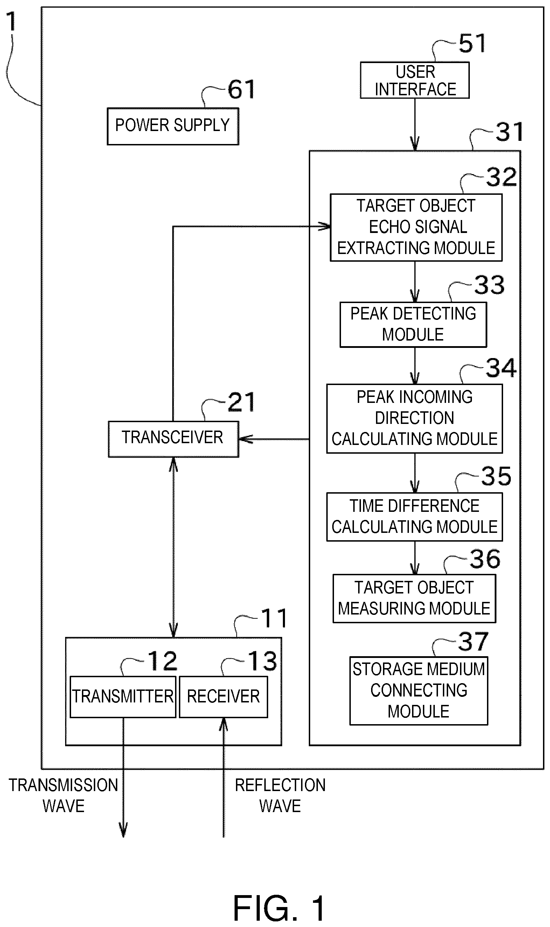

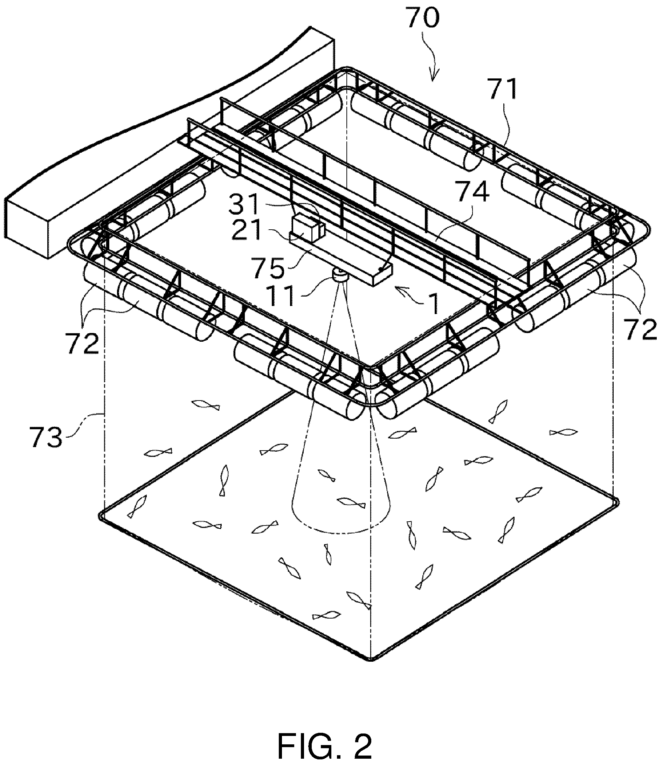

Next, one embodiment of the present disclosure is described with reference to the drawings. Fig. 1 is a block diagram illustrating the entire configuration of a growth condition measuring device 1 according to one embodiment of the present disclosure. Fig. 2 is a perspective view illustrating a situation in which the growth condition measuring device 1 is used for a fish cage 70.

The growth condition measuring device 1 of this embodiment illustrated in Figs. 1 and 2 (also referred to as a "target object measuring device") is mainly used for calculating data related to a fish height, a fish length, or a fish weight of fish which exists underwater by utilizing a transducer (echo sounder) 11.

For example, as illustrated in Fig. 2, the growth condition measuring device 1 of this embodiment is used for the fish cage 70 which is installed in the sea for a cultivation of fish which is a kind of aquatic organism.

The fish cage 70 is configured as a net-type fish cage, and includes a frame 71, floats 72, a net 73, and a pier 74.

The frame 71 is formed so as to have a loop shape in a plan view. A plurality of floats 72 are attached to the frame 71, and therefore, the frame 71 can float on the water surface. The frame 71 is connected to a weight at the bottom of water by ropes for mooring (not illustrated).

The net 73 is fixed to the frame 71 at an upper end part. The net 73 is suspended so that it partitions underwater to form a closed space in which fish are bred. On the frame 71, the pier 74 is fixed for various works related to the cultivation to be performed.

As illustrated in Fig. 2, a float 75 floats substantially in a center part of the interior of the frame 71 of the fish cage, and the float 75 is tied to the pier 74 by ropes. The float 75 is provided with the growth condition measuring device 1 of this embodiment.

As illustrated in Fig. 1, the growth condition measuring device 1 includes the transducer 11, a transceiver 21, a signal processor 31, a user interface 51, and a power supply 61. Note that, the user interface 51 and the power supply 61 are omitted in Fig. 2.

The transducer 11 is capable of converting an electrical signal to ultrasonic vibration, and vice versa, and can detect underwater utilizing a transmission wave which is an ultrasonic wave. In this embodiment, the transducer 11 is attached to a lower part of the float 75. The transducer 11 is oriented downwardly to transmit the ultrasonic wave underwater from a water-surface side.

In this embodiment, the transducer 11 includes one transmitter 12 and a receiver 13 having a plurality of elements divided in four receiving channels.

The transmitter 12 is capable of transmitting the transmission wave underwater, and each receiving channel of the receiver 13 can receive the reflection wave reflected from an underwater target object. Then, the transducer 11 can convert the data related to the received reflection wave into an electrical signal.

In this embodiment, the transducer 11 can acquire the position of the target object based on a difference in timings at which the four receiving channels receive the reflection wave (i.e., a phase difference of the received reflection waves). Therefore, a three-dimensional detection by a known split-beam method can be achieved. Note that the configuration of the transducer 11 may be changed suitably. For example, the element(s) of the receiver 13 may be used as the transmitter 12 so that the wave transmission and the wave reception are performed by the same element(s).

The transceiver 21 is connected to the transducer 11 through an electrical cable. The transceiver 21 can output an electrical signal to the transducer 11 through the electrical cable for causing the transducer 11 to transmit the transmission wave. Moreover, the transceiver 21 can acquire the electrical signal acquired by the transducer 11 based on the reflection wave, through the electrical cable. Then, the transceiver 21 can convert the electrical signal acquired from the transducer 11 into a reception signal which is a digital signal.

The signal processor 31 is configured as a known computer. The signal processor 31 is connected to the transceiver 21 through a suitable communication cable. The signal processor 31 can communicate with the transceiver 21. The signal processor 31 acquires the reception signal from the transceiver 21 by the communication described above. The signal processor 31 performs a suitable data processing to the acquired reception signal.

The signal processor 31 includes a target object echo signal extracting module 32, a peak detecting module 33, a peak incoming direction calculating module 34, a time difference calculating module 35, a target object measuring module 36, and a storage medium connecting module 37.

In detail, the signal processor 31 includes a CPU, a ROM, and a RAM. For example, the ROM stores a program for implementing a method of measuring a target object of the present disclosure. By a collaboration of the hardware and software described above, the signal processor 31 can function as the target object echo signal extracting module 32, the peak detecting module 33, the peak incoming direction calculating module 34, the time difference calculating module 35, the target object measuring module 36, and the storage medium connecting module 37.

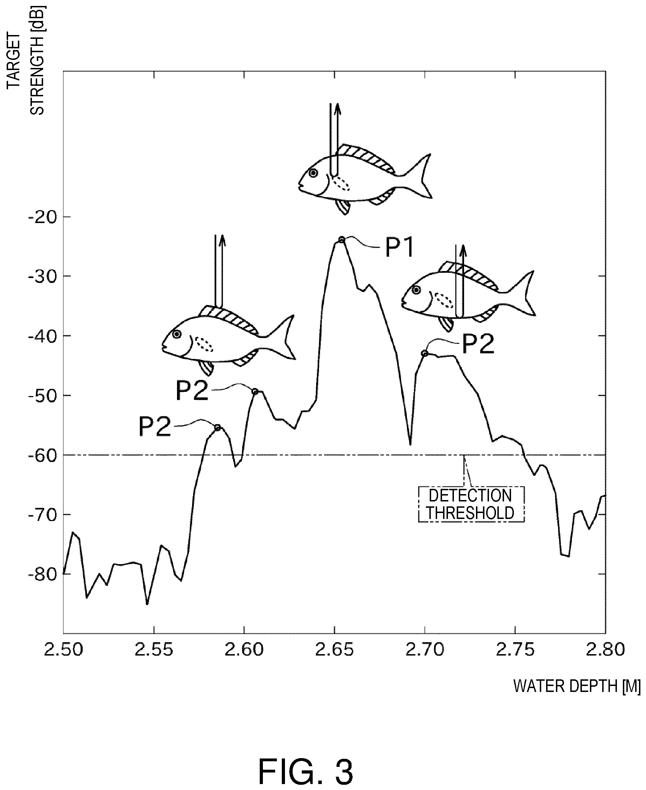

The target object echo signal extracting module 32 extracts an echo signal indicative of fish from the reception signal acquired from the transceiver 21, based on an intensity etc. of the echo signal. An example of echo signal is illustrated graphically in Fig. 3. However, in order to facilitate the description of a location at which the ultrasonic wave reflects, the horizontal axis of the graph is illustrated so that time is converted into a distance (water depth) based on a known formula related to sound velocity.

In this embodiment, the target object echo signal extracting module 32 determines whether a value of a target strength is a given detection threshold illustrated in Fig. 3 or above, and extracts the reception signal having the value which is the detection threshold or above as the echo signal of fish. Note that, in order to exclude a reflection wave from the net 73 etc., the reception signal with excessively long time from a wave transmission to a wave reception is removed from the extraction target. Since the target strength is known, the detailed description thereof is omitted, but it is a parameter indicative of a degree of the ultrasonic wave partially returning to the incidence direction after hitting fish and being scattered. Therefore, it can be considered to be substantially the same as the echo intensity. The target object echo signal extracting module 32 outputs the echo signal indicative of fish to the peak detecting module 33.

The peak detecting module 33 detects a peak of the target strength from the echo signal of fish extracted by the target object echo signal extracting module 32. Generally, in the echo signal originating from one fish, a curve indicative of a time transition of the target strength becomes a complicated shape in which a maximum value and a minimum value appear alternately. The peak detecting module 33 detects each of a plurality of peaks. The peak detecting module 33 outputs data related to each detected peak to the peak incoming direction calculating module 34.

The peak incoming direction calculating module 34 calculates an incoming direction of each peak detected by the peak detecting module 33, based on a deviation of the timing at which each receiving channel receives the reflection wave.

It is generally known that, among each part of a fish (each part including a dorsal fin, a fish belly, etc.), the ultrasonic wave transmitted from the transducer 11 is most strongly reflected by the swim bladder. Therefore, as illustrated in Fig. 3, when the target strength indicates the greatest peak, it can be considered that this peak originates in the reflection wave reflected by the swim bladder. In the following description, this peak is referred to as "first peak P1."

Regarding another peak which appears at a timing near the first peak P1 (in other words, the peak that is not the maximum), it is assumed that, as a result of calculating the incoming direction by the peak incoming direction calculating module 34, a difference between the incoming direction of the peak and the incoming direction of the first peak P1 is smaller than a given threshold. In this case, this peak (in the following description, it is referred to as a "second peak P2") can be said that it comes from substantially the same direction as the first peak P1. Therefore, it can be considered that the first peak P1 and the second peak P2 detect the reflection waves reflected from the same fish, and the second peak P2 can be considered that it originates from the reflection wave reflected from the back, belly, etc. of the fish, as illustrated in Fig. 3.

The time difference calculating module 35 detects the maximum peak at which the echo intensity is the maximum, from the plurality of peaks included in the echo signals. Moreover, the time difference calculating module 35 calculates a time difference between a timing of the first peak P1 corresponding to the maximum peak and a timing of the second peaks P2. Then, the time difference calculating module 35 generates a histogram based on the calculated time difference. The generation of the histogram uses a large number of echo signals obtained by continuously observing the echo signals for a certain amount of time.

The histogram generated by the time difference calculating module 35 indicates the relation between bins of the time difference (relative time) between the timing at which the second peak P2 appears and the timing at which the first peak P1 appears and a frequency. In this histogram, the timing at which the second peak P2 appears is expressed by a time difference on the basis of the timing at which the first peak P1 appears. When the second peak P2 appears at a timing before the first peak P1, the time difference becomes a negative value. When the second peak P2 appears at a timing after the first peak P1, the time difference becomes a positive value.

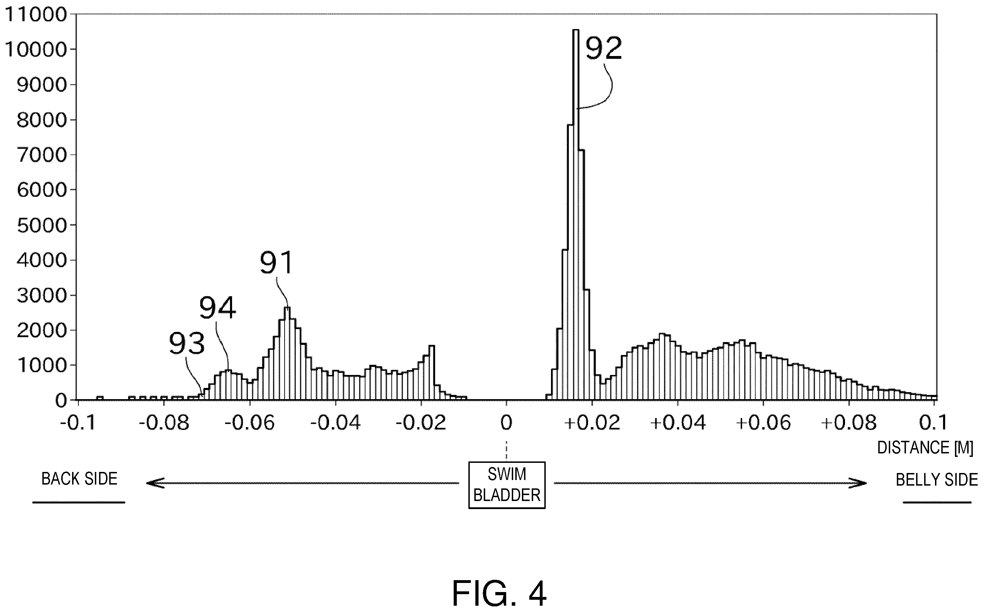

From this time difference, it is possible to obtain a difference in the distance to the reflected locations of the ultrasonic wave corresponding to the each peak. Fig. 4 illustrates the histogram generated by the time difference calculating module 35, where the time difference in the horizontal axis is converted into the distance, in order to facilitate the description. This conversion can be performed using a known formula related to sound velocity. Since it can be considered that the first peak P1 originates from the swim bladder of fish, when the horizontal axis is converted into the distance, zero in the horizontal axis (distance) of the histogram substantially indicates the position of the swim bladder. As described above, the transducer 11 is installed so as to send the transmission wave downwardly from near the water surface. Therefore, the negative value in the horizontal axis means the back side of the fish from the swim bladder position (reference position), and the positive value means the belly side of the fish from the swim bladder position.

Thus, the histogram can provide the tendency of the relative spatial relationship between the swim bladder and the locations other than the swim bladder at which the ultrasonic wave is reflected.

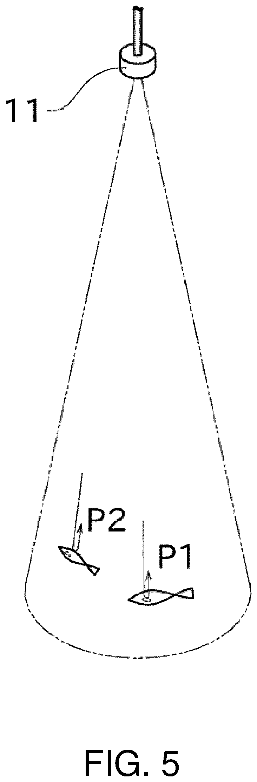

Meanwhile, as conceptually illustrated in Fig. 5, when a plurality of fish exist at a substantially equal distance from the transducer 11, the timings of the echo signals from the different fish may overlap with each other. If the first peak P1 and the second peak P2 are caused by the reflection waves reflected from different fish, the time difference does not indicate the relative spatial relationship between reflection sources in the same fish, which causes a significant decrease in accuracy upon estimating the size etc. of the fish. The overlap of the echo signals from the different fish becomes a problem, particularly when the density of the fish is high.

In this regard, in this embodiment, the time difference calculating module 35 calculates the time difference between the first peak P1 and the second peak P2 only when the difference in the incoming direction of the reflection waves between the first peak P1 and the second peak P2 is smaller than the given threshold. In other words, the second peak P2 of which the difference in the incoming direction of the reflection wave with that from the first peak P1 is the given threshold or above is not counted for the frequency of the histogram in Fig. 4. Therefore, since a ratio of noise in the histogram can be reduced, the estimation accuracy can be improved effectively.

The target object measuring module 36 can calculate the data related to the size and the weight of fish by utilizing a suitable calculation algorithm stored in a memory and the histogram generated by the time difference calculating module 35.

Specifically, the target object measuring module 36 calculates a timing corresponding to the bin at which the frequency becomes a maximum value (may also be referred to as a "mode"), based on a distribution of the second peak P2 obtained from a reflection on the back side relative the swim bladder (in other words, a distribution in an area where the distance is smaller than zero in the histogram of Fig. 4). In this embodiment, a mode 91 in which the frequency is maximum in the entire back side is obtained. Therefore, a location on the back side at which the ultrasonic wave is strongly reflected, though it is not as strong as the swim bladder, is obtained. The target object measuring module 36 estimates a fish height (height of fish) based on this timing, by a calculation using a given formula. Then, the target object measuring module 36 obtains a fish length, a fish width, and a fish weight by converting the calculated fish height into the fish length (length of fish), fish width (body width of the fish), or the fish weight (weight of the fish). Thus, by utilizing the mode which appears in the histogram, it is possible to obtain a result which well reflects the overall trend of fish.

Thus, in this embodiment, the fish height etc. is calculated only using the feature of the shape of the histogram in the area where the second peak P2 appears earlier than the first peak P1, in the histogram of Fig. 4. Thus, the estimation which focuses on a certain structural feature which is located on the back side relative to the swim bladder of the fish (for example, a dorsal fin) can be achieved. For example, when the distance between the swim bladder and the dorsal fin has a strong correlation with the fish height etc. in a certain fish species, since the feature can be relatively emphasized by narrowing down a range of the timing distribution to be utilized, the above calculation is effective.

Upon the estimation of fish height etc., a distribution of the second peak P2 obtained by a reflection at the fish belly side relative to the swim bladder may be used. However, in a range in which the present inventor experimented, there is no feature of the distribution on the fish belly side in the histogram (for example, the timing corresponding to the mode 92 in which the frequency becomes the maximum on the fish belly side in Fig. 4) which indicates a strong correlation with the fish length etc. Therefore, in this embodiment, the fish height etc. is calculated only using the distribution on the back side. However, depending on the fish species and the situation, it may be preferable to use the distribution on the fish belly side for the estimation. Both the distributions on the back side and the fish belly side may be used for the estimation.

As described above, the time difference when generating the histogram is on the basis of the first peak P1. In other words, the time difference is calculated using the timing of the first peak P1. Therefore, the reference is clarified and the calculation accuracy can be improved. Moreover, since the values, such as the fish height, are calculated using the feature of the shape of the histogram, statistical validity can be given to the estimation result and the estimation accuracy can be improved.

The fish height etc. is not limited to the mode but it can also be calculated using other features of the shape of the histogram. For example, in the histogram on the back side relative to the swim bladder, the frequency rises substantially from zero as it approaches the swim bladder from a sufficiently distant location. The fish height etc. may also be estimated using a timing corresponding to this rising part 93 (also referred to as an "edge"). The rising part 93 represents a substantial boundary of the distribution of the second peak P2. Moreover, in the histogram on the back side, the fish height etc. may also be estimated using a timing corresponding to a small maximum value (mode 94) at a more-distant location from the swim bladder than the mode in which the frequency is the greatest. Such a timing has a comparatively large time difference from the timing at which the first peak P1 with the maximum echo intensity appears, as compared with the mode 91 described above. Therefore, the fish height etc. can be estimated with high accuracy since it becomes less susceptible to the acoustic influence of the first peak P1.

The storage medium connecting module 37 can be connected to a known storage medium, such as a removable memory and a hard disk drive. Then, the signal processor 31 can output the calculated data related to the fish height, fish weight, the fish length etc. and the data outputted from the signal processor 31 is stored in the storage medium connected to the storage medium connecting module 37.

The user interface 51 is a device for inputting a user instruction to the signal processor 31. The user interface 51 is not limited particularly as long as the user instruction can be inputted into the signal processor 31. For example, the user interface 51 may be a device connected to the signal processor 31 through an interface (not illustrated). Moreover, the user interface 51 may be a device integrally provided with the signal processor 31.

The power supply 61 supplies electric power to the transceiver 21, the signal processor 31, etc. For example, the power supply 61 is preferably a rechargeable secondary battery, such as a lithium ion battery and a lead battery. Note that, for example, the power supply 61 may be a device which can obtain electric power from mechanical power, such as a generator.

The transceiver 21 and the signal processor 31 can be accommodated in a waterproof casing. The power supply 61 may be accommodated in the waterproof case together with the transceiver 21 or the signal processor 31.

When breeding fish in the fish cage 70, the fish species is known in advance and a rough value of fish length etc. can also be estimated in advance. In this case, it is preferable that the information relating to the tendency of the reflection wave according to the fish species, the fish length, etc. is stored in the memory in advance, and the target object measuring module 36 performs the estimating calculation using the information. Therefore, for example, the target object measuring module 36 can appropriately determine which of the plurality of modes appearing in the histogram should be used for the estimation. As a result, the data, such as the fish height, can be estimated with high accuracy.

In this embodiment, the transducer 11 having four receiving channels and capable of obtaining the incoming direction of the reflection wave by the split-beam method is used. However, a known dual beam type transducer may be used instead of the transducer 11. In the dual-beam method, the transducer 11 includes a transmitter 12 and a receiver 13 having two receiving channels. The transmitter 12 transmits the transmission wave underwater. Each receiving channel of the receiver 13 is a receiving channel having different directivity and receives the reflection wave reflected from the underwater target object. Then, the transducer 11 converts the data related to the received reflection wave into the electrical signal. When the dual-beam method is used, the peak incoming direction calculating module 34 calculates an angle of the incoming direction of the reflection wave with respect to the center axis direction of the transmission wave based on a difference between the echo intensities received by the two receiving channels. Thus, it can determine whether the first peak P1 and the second peak P2 originate from the same fish.

In order to realize the two receiving channels with different directivities, for example, two elements with different dimensions are used and the reception is performed by each element to form the two receiving channels. Without being limited to this configuration, for example, one element is used and the reception is performed at 2 frequencies of a low frequency and a high frequency to form the two receiving channels. Note that the configuration of the transducer 11 may be changed suitably. For example, as the transmitter 12, the element of the receiver 13 may be used and the same element performs the wave transmission and the wave reception.

As described above, the growth condition measuring device 1 of this embodiment includes the transducer 11, the target object echo signal extracting module 32, the peak detecting module 33, the peak incoming direction calculating module 34, the time difference calculating module 35, and the target object measuring module 36. The transducer 11 transmits the transmission wave underwater and receives the reflection wave. The target object echo signal extracting module 32 extracts the echo signal indicative of fish by using the data of the reflection wave. The peak detecting module 33 detects each of the plurality of peaks included in the echo signal indicative of fish. The peak incoming direction calculating module 34 calculates the incoming direction of each of the plurality of peaks based on the reflection wave. The time difference calculating module 35 calculates the time difference between a timing of appearance of the first peak P1 and the second peak P2 different from the first peak P1, between which the difference in the incoming directions is smaller than the given threshold, among the plurality of peaks. The target object measuring module 36 calculates the data related to the size and/or the weight of the fish by using the time difference.

Therefore, since the size and the weight of fish are calculated based on the difference in the timing between the peaks which come from substantially the same direction and are highly possibly acquired from the same fish, the accurate data related to the target fish can be calculated, even if the density of fish is high.

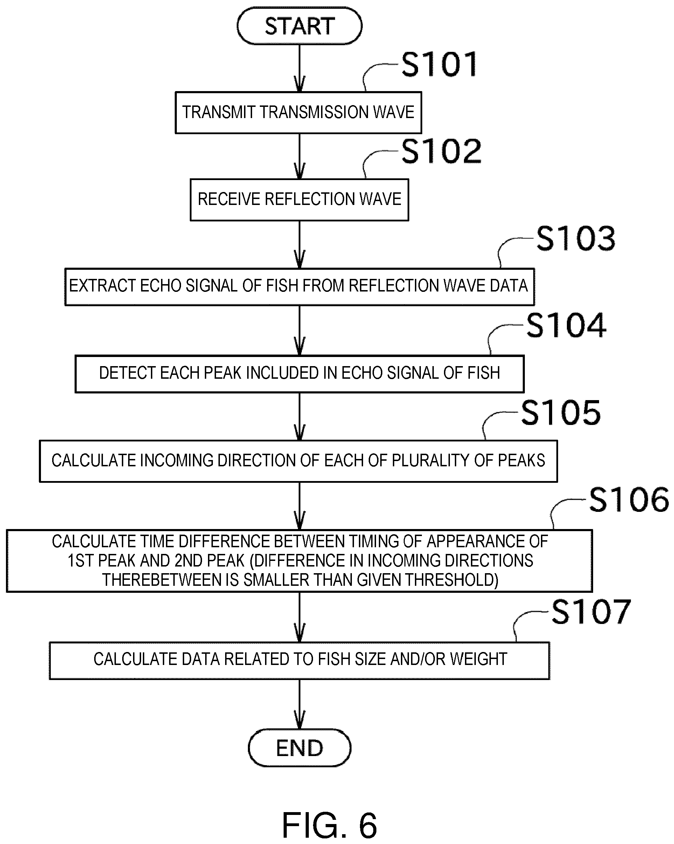

Moreover, the growth condition measuring device 1 of this embodiment implements the following method of measuring a growth condition, as illustrated in a flowchart of Fig. 6. That is, it transmits the transmission wave underwater (Step S101). It receives the reflection wave (Step S102). It extracts the echo signal of fish from the data of the reflection wave (Step S103). It detects each peak included in the echo signal of fish (Step S104). Based on the reflection wave, it calculates the incoming direction of each of the plurality of peaks (Step S105). It calculates the time difference between a timing of appearance of the first peak and the second peak different from the first peak, between which the difference in the incoming directions is smaller than the given threshold, among the plurality of peaks (Step S106). Using the time difference, it calculates the data related to the size and/or the weight of the fish (Step S107).

Although the suitable embodiment of the present disclosure is illustrated as described above, the configuration described above may be changed as follows, for example.

The signal processor 31 may generate display data for displaying the data related to the size and the weight of the target object. Then, the signal processor 31 may output the display data to a suitable display device connected to the signal processor 31.

In the above embodiment, the transducer 11 is oriented downwardly so as to transmit the ultrasonic wave underwater from the water-surface side. However, the transducer 11 may be disposed in a bottom part of the net 73, and may transmit the ultrasonic wave toward the water surface thereabove. In this case, the second peak P2 caused by the reflection from the back side of fish appears later than the first peak P1, and the second peak P2 caused by the reflection from the fish belly side appears earlier than the first peak P1.

The target object measuring module 36 may estimate the fish height etc. directly from the distance between the first peak P1 and the second peak P2 calculated by the time difference calculating module 35, without using the histogram. In this case, the time difference calculating module 35 may not need to generate the histogram.

The fish height etc. may be estimated using the time difference between a plurality of second peaks P2.

The transducer 11 may be provided with five or more receiving channels. Moreover, the layout of the elements of the receiver 13 may be changed suitably.

The target for the estimation of the fish height etc. is not limited to the fish cultivated in the fish farm (for example, the fish cage 70). For example, the transducer 11 may be attached to a fishing boat, and it may be used as a device for estimating the fish length etc. of a school of fish that swim in the sea and have substantially the same size and the same weight.

### DESCRIPTION OF REFERENCE CHARACTERS

- 1: Growth Condition Measuring Device (Target Object Measuring Device)
- 11: Transducer
- 32: Target Object Echo Signal Extracting Module
- 33: Peak Detecting Module
- 34: Peak Incoming Direction Calculating Module
- 35: Time Difference Calculating Module
- 36: Target Object Measuring Module

### TERMINOLOGY

It is to be understood that not necessarily all objects or advantages may be achieved in accordance with any particular embodiment described herein. Thus, for example, those skilled in the art will recognize that certain embodiments may be configured to operate in a manner that achieves or optimizes one advantage or group of advantages as taught herein without necessarily achieving other objects or advantages as may be taught or suggested herein.

All of the processes described herein may be embodied in, and fully automated via, software code modules executed by a computing system that includes one or more computers or processors. The code modules may be stored in any type of non-transitory computer-readable medium or other computer storage device. Some or all the methods may be embodied in specialized computer hardware.

Many other variations than those described herein will be apparent from this disclosure. For example, depending on the embodiment, certain acts, events, or functions of any of the algorithms described herein can be performed in a different sequence, can be added, merged, or left out altogether (e.g., not all described acts or events are necessary for the practice of the algorithms). Moreover, in certain embodiments, acts or events can be performed concurrently, e.g., through multi-threaded processing, interrupt processing, or multiple processors or processor cores or on other parallel architectures, rather than sequentially. In addition, different tasks or processes can be performed by different machines and/or computing systems that can function together.

The various illustrative logical blocks and modules described in connection with the embodiments disclosed herein can be implemented or performed by a machine, such as a processor. A processor can be a microprocessor, but in the alternative, the processor can be a controller, microcontroller, or state machine, combinations of the same, or the like. A processor can include electrical circuitry configured to process computer-executable instructions. In another embodiment, a processor includes an application specific integrated circuit (ASIC), a field programmable gate array (FPGA) or other programmable device that performs logic operations without processing computer-executable instructions. A processor can also be implemented as a combination of computing devices, e.g., a combination of a digital signal processor (DSP) and a microprocessor, a plurality of microprocessors, one or more microprocessors in conjunction with a DSP core, or any other such configuration. Although described herein primarily with respect to digital technology, a processor may also include primarily analog components. For example, some or all of the signal processing algorithms described herein may be implemented in analog circuitry or mixed analog and digital circuitry. A computing environment can include any type of computer system, including, but not limited to, a computer system based on a microprocessor, a mainframe computer, a digital signal processor, a portable computing device, a device controller, or a computational engine within an appliance, to name a few.

Conditional language such as, among others, "can," "could," "might" or "may," unless specifically stated otherwise, are otherwise understood within the context as used in general to convey that certain embodiments include, while other embodiments do not include, certain features, elements and/or steps. Thus, such conditional language is not generally intended to imply that features, elements and/or steps are in any way required for one or more embodiments or that one or more embodiments necessarily include logic for deciding whether these features, elements and/or steps are included or are to be performed in any particular embodiment.

Disjunctive language such as the phrase "at least one of X, Y, or Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

Any process descriptions, elements or blocks in the flow diagrams described herein and/or depicted in the attached figures should be understood as potentially representing modules, segments, or portions of code which include one or more executable instructions for implementing specific logical functions or elements in the process. Alternate implementations are included within the scope of the embodiments described herein in which elements or functions may be deleted, executed out of order from that shown, or discussed, including substantially concurrently or in reverse order, depending on the functionality involved as would be understood by those skilled in the art.

Unless otherwise explicitly stated, articles such as "a" or "an" should generally be interpreted to include one or more described items. Accordingly, phrases such as "a device configured to" are intended to include one or more recited devices. Such one or more recited devices can also be collectively configured to carry out the stated recitations. For example, "a processor configured to carry out recitations A, B and C" can include a first processor configured to carry out recitation A working in conjunction with a second processor configured to carry out recitations B and C. The same holds true for the use of definite articles used to introduce embodiment recitations. In addition, even if a specific number of an introduced embodiment recitation is explicitly recited, those skilled in the art will recognize that such recitation should typically be interpreted to mean at least the recited number (e.g., the bare recitation of "two recitations," without other modifiers, typically means at least two recitations, or two or more recitations).

It will be understood by those within the art that, in general, terms used herein, are generally intended as "open" terms (e.g., the term "including" should be interpreted as "including but not limited to," the term "having" should be interpreted as "having at least," the term "includes" should be interpreted as "includes but is not limited to," etc.).

For expository purposes, the term "horizontal" as used herein is defined as a plane parallel to the plane or surface of the floor of the area in which the system being described is used or the method being described is performed, regardless of its orientation. The term "floor" can be interchanged with the term "ground" or "water surface." The term "vertical" refers to a direction perpendicular to the horizontal as just defined. Terms such as "above," "below," "bottom," "top," "side," "higher," "lower," "upper," "over," and "under," are defined with respect to the horizontal plane.

As used herein, the terms "attached," "connected," "mated" and other such relational terms should be construed, unless otherwise noted, to include removable, moveable, fixed, adjustable, and/or releasable connections or attachments. The connections/attachments can include direct connections and/or connections having intermediate structure between the two components discussed.

Numbers preceded by a term such as "approximately," "about," and "substantially" as used herein include the recited numbers, and also represent an amount close to the stated amount that still performs a desired function or achieves a desired result. For example, the terms "approximately," "about," and "substantially" may refer to an amount that is within less than 10% of the stated amount. Features of embodiments disclosed herein preceded by a term such as "approximately," "about," and "substantially" as used herein represent the feature with some variability that still performs a desired function or achieves a desired result for that feature.

## Claims

1. A target object measuring device (1), comprising:
a transducer (11) for transmitting a transmission wave underwater and receiving a reflection wave;
a target object echo signal extracting module (32) for extracting an echo signal indicative of a target object from data of the reflection wave;
a peak detecting module (33) for detecting each of a plurality of peaks (P1, P2) included in the echo signal;
a peak incoming direction calculating module (34) for calculating an incoming direction of each of the plurality of peaks (P1, P2) based on the reflection wave;
**characterized by**:
a time difference calculating module (35) for calculating a time difference between a timing of appearance of a first peak (P1) and a second peak (P2) different from the first peak (P1), among the plurality of peaks (P1, P2), a difference in the incoming direction between the first peak (P1) and the second peak (P2) being smaller than a given threshold; and
a target object measuring module (36) for calculating data related to a size and/or a weight of the target object based on the time difference,
wherein the time difference calculating module (35) generates a histogram based on the time difference calculated for a plurality of the echo signals, and
wherein the target object measuring module (36) calculates the data related to the size and/or the weight of the target object based on the histogram.

2. The target object measuring device (1) of claim 1, wherein the time difference calculating module (35) detects a maximum peak at which an echo intensity is the maximum, among the plurality of peaks (P1, P2) included in the echo signal, and calculates the time difference between a time when the maximum peak, as the first peak (P1), appears and a time when the second peak (P2) appears.

3. The target object measuring device (1) of claim 1 or 2, wherein the histogram is a histogram indicative of a relation between bins of the time difference and a frequency, and
wherein the target object measuring module (36) calculates the data related to the size and/or the weight of the target object based on a distribution of the histogram in an area in which the second peak (P2) appears only earlier than the timing of the first peak (P1), or a distribution of the histogram in an area in which the second peak (P2) appears only later than the timing of the first peak (P1).

4. The target object measuring device (1) of any of the preceding claims, wherein the target object measuring module (36) calculates the data related to the size and/or the weight of the target object based on a time difference corresponding to a mode (91) appearing in the histogram.

5. The target object measuring device (1) of any one of claims 1 to 3, wherein the target object measuring module (36) calculates the data related to the size and/or the weight of the target object based on a time difference corresponding to an edge (93) appearing in the histogram.

6. The target object measuring device (1) of the preceding claims, wherein the transducer (11) has four or more receiving channels for receiving the reflection wave, and
wherein the peak incoming direction calculating module (34) calculates the incoming direction based on a difference between timings at which the receiving channels receive the reflection wave.

7. The target object measuring device (1) of any one of claims 1 to 5, wherein the transducer (11) has two receiving channels for receiving the reflection wave, and
wherein the peak incoming direction calculating module (34) calculates the incoming direction based on a difference between intensities of the reflection wave received by the receiving channels.

8. The target object measuring device (1) of the preceding claims, wherein the target object is fish raised in a fish farm.

9. The target object measuring device (1) of claim 8, wherein the target object measuring module (36) calculates the data related to at least one of a fish height, a fish length, a fish width, and a fish weight.

10. A method of measuring a target object, comprising:
transmitting (S101) a transmission wave underwater;
receiving (S102) a reflection wave;
extracting (S103) an echo signal indicative of a target object from data of the reflection wave;
detecting (S104) each of a plurality of peaks (P1, P2) included in the echo signal;
calculating (S105) an incoming direction of each of the plurality of peaks (P1, P2) based on the reflection wave;
**characterized by**:
calculating (S106) a time difference between a timing of appearance of a first peak (P1) and a second peak (P2) different from the first peak (P1), among the plurality of peaks (P1, P2), a difference in the incoming direction between the first peak (P1) and the second peak (P2) being smaller than a given threshold;
generating a histogram based on the time difference calculated for a plurality of the echo signals; and
calculating (S107) data related to a size and/or a weight of the target object based on the histogram.

## Patentansprüche

1. Zielobjektmessvorrichtung (1), die Folgendes umfasst:
einen Wandler (11) zum Übertragen einer Übertragungswelle unter Wasser und zum Empfangen einer Reflexionswelle;
ein Zielobjektechosignal-Extraktionsmodul (32) zum Extrahieren eines ein Zielobjekt anzeigenden Echosignals aus Daten der Reflexionswelle;
ein Spitzenerkennungsmodul (33) zum Erkennen jeder von mehreren in dem Echosignal enthaltenen Spitzen (P1, P2);
ein Spitzenankunftsrichtung-Berechnungsmodul (34) zum Berechnen einer Ankunftsrichtung jeder der mehreren Spitzen (P1, P2) auf der Basis der Reflexionswelle;
**gekennzeichnet durch**:
ein Zeitdifferenzberechnungsmodul (35) zum Berechnen einer Zeitdifferenz zwischen einem Zeitpunkt des Auftretens einer ersten Spitze (P1) und einer sich von der ersten Spitze (P1) unterscheidenden zweiten Spitze (P2) unter den mehreren Spitzen (P1, P2), wobei eine Differenz in der Ankunftsrichtung zwischen der ersten Spitze (P1) und der zweiten Spitze (P2) kleiner ist als ein gegebener Schwellenwert; und
ein Zielobjektmessmodul (36) zum Berechnen von Daten in Bezug auf eine Größe und/oder ein Gewicht des Zielobjekts auf der Basis der Zeitdifferenz,
wobei das Zeitdifferenzberechnungsmodul (35) ein Histogramm auf der Basis der für mehrere der Echosignale berechneten Zeitdifferenz erzeugt, und
wobei das Zielobjektmessmodul (36) die Daten in Bezug auf die Größe und/oder das Gewicht des Zielobjekts auf der Basis des Histogramms berechnet.

2. Zielobjektmessvorrichtung (1) nach Anspruch 1, wobei das Zeitdifferenzberechnungsmodul (35) eine maximale Spitze, bei der eine Echointensität maximal ist, unter den mehreren im Echosignal enthaltenen Spitzen (P1, P2) erfasst und die Zeitdifferenz zwischen einem Zeitpunkt, zu dem die maximale Spitze als erste Spitze (P1) auftritt, und einem Zeitpunkt berechnet, zu dem die zweite Spitze (P2) auftritt.

3. Zielobjektmessvorrichtung (1) nach Anspruch 1 oder 2, wobei das Histogramm ein Histogramm ist, das eine Beziehung zwischen Bins der Zeitdifferenz und einer Frequenz anzeigt, und
wobei das Zielobjektmessmodul (36) die Daten in Bezug auf die Größe und/oder das Gewicht des Zielobjekts auf der Basis einer Verteilung des Histogramms in einem Bereich, in dem die zweite Spitze (P2) nur früher als der Zeitpunkt der ersten Spitze (P1) auftritt, oder einer Verteilung des Histogramms in einem Bereich berechnet, in dem die zweite Spitze (P2) nur später als der Zeitpunkt der ersten Spitze (P1) auftritt.

4. Zielobjektmessvorrichtung (1) nach einem der vorherigen Ansprüche, wobei das Zielobjektmessmodul (36) die Daten in Bezug auf die Größe und/oder das Gewicht des Zielobjekts auf der Basis einer Zeitdifferenz berechnet, die einem im Histogramm auftretenden Modus (91) entspricht.

5. Zielobjektmessvorrichtung (1) nach einem der Ansprüche 1 bis 3, wobei das Zielobjektmessmodul (36) die Daten in Bezug auf die Größe und/oder das Gewicht des Zielobjekts auf der Basis einer Zeitdifferenz berechnet, die einer im Histogramm auftretenden Kante (93) entspricht.

6. Zielobjektmessvorrichtung (1) nach den vorherigen Ansprüchen, wobei der Wandler (11) vier oder mehr Empfangskanäle zum Empfangen der Reflexionswelle hat, und
wobei das Spitzenankunftsrichtung-Berechnungsmodul (34) die Ankunftsrichtung auf der Basis einer Differenz zwischen Zeitpunkten berechnet, zu denen die Empfangskanäle die Reflexionswelle empfangen.

7. Zielobjektmessvorrichtung (1) nach einem der Ansprüche 1 bis 5, wobei der Wandler (11) zwei Empfangskanäle zum Empfangen der Reflexionswelle hat, und
wobei das Spitzenankunftsrichtung-Berechnungsmodul (34) die Ankunftsrichtung auf der Basis einer Differenz zwischen Intensitäten der von den Empfangskanälen empfangenen Reflexionswelle berechnet.

8. Zielobjektmessvorrichtung (1) nach den vorherigen Ansprüchen, wobei das Zielobjekt in einer Fischzucht aufgezogene Fische sind.

9. Zielobjektmessvorrichtung (1) nach Anspruch 8, wobei das Zielobjektmessmodul (36) die Daten in Bezug auf mindestens eines von einer Fischhöhe, einer Fischlänge, einer Fischbreite und einem Fischgewicht berechnet.

10. Verfahren zum Messen eines Zielobjekts, das Folgendes beinhaltet:
Übertragen (S101) einer Übertragungswelle unter Wasser;
Empfangen (S102) einer Reflexionswelle;
Extrahieren (S103) eines ein Zielobjekt anzeigenden Echosignals aus Daten der Reflexionswelle;
Erkennen (S104) jeder von mehreren im Echosignal enthaltenen Spitzen (P1, P2);
Berechnen (S105) einer Ankunftsrichtung jeder der mehreren Spitzen (PI, P2) auf der Basis der Reflexionswelle;
**gekennzeichnet durch**:
Berechnen (S106) einer Zeitdifferenz zwischen einem Zeitpunkt des Auftretens einer ersten Spitze (P1) und einer sich von der ersten Spitze (P1) unterscheidenden zweiten Spitze (P2) unter den mehreren Spitzen (P1, P2), wobei eine Differenz in der Ankunftsrichtung zwischen der ersten Spitze (P1) und der zweiten Spitze (P2) kleiner ist als ein gegebener Schwellenwert;
Erzeugen eines Histogramms auf der Basis der für mehrere der Echosignale berechneten Zeitdifferenz; und
Berechnen (S107) von Daten in Bezug auf eine Größe und/oder ein Gewicht des Zielobjekts auf der Basis des Histogramms.

## Revendications

1. Dispositif de mesure d'objet cible (1), comprenant :
un transducteur (11) pour émettre une onde d'émission sous-marine et recevoir une onde de réflexion ;
un module d'extraction de signal d'écho d'objet cible (32) pour extraire, de données de l'onde de réflexion, un signal d'écho indiquant un objet cible ;
un module de détection de pics (33) pour détecter chaque pic d'une pluralité de pics (P1, P2) compris dans le signal d'écho ;
un module de calcul de direction entrante de pics (34) pour calculer une direction entrante de chaque pic de la pluralité de pics (P1, P2), sur la base de l'onde de réflexion ;
**caractérisé par** :
un module de calcul de différence de temps (35) pour calculer une différence de temps entre un moment d'apparition d'un premier pic (P1) et d'un second pic (P2) différent du premier pic (P1), parmi la pluralité de pics (P1, P2), une différence dans la direction entrante entre le premier pic (P1) et le second pic (P2) étant inférieure à un seuil donné ; et
un module de mesure d'objet cible (36) pour calculer des données relatives à une taille et/ou à un poids de l'objet cible, sur la base de la différence de temps,
le module de calcul de différence de temps (35) générant un histogramme sur la base de la différence de temps calculée pour une pluralité des signaux d'écho, et
le module de mesure d'objet cible (36) calculant les données relatives à la taille et/ou au poids de l'objet cible sur la base de l'histogramme.

2. Dispositif de mesure d'objet cible (1) selon la revendication 1, le module de calcul de différence de temps (35) détectant un pic maximal où une intensité d'écho est maximale, parmi la pluralité de pics (P1, P2) compris dans le signal d'écho, et calculant la différence de temps entre un moment où le pic maximal, en tant que premier pic (P1), apparaît et un moment où le second pic (P2) apparaît.

3. Dispositif de mesure d'objet cible (1) selon la revendication 1 ou 2, l'histogramme étant un histogramme indiquant une relation entre des intervalles de la différence de temps et une fréquence, et
le module de mesure d'objet cible (36) calculant les données relatives à la taille et/ou au poids de l'objet cible sur la base d'une distribution de l'histogramme dans une zone où le second pic (P2) apparaît seulement avant le moment du premier pic (P1) ou d'une distribution de l'histogramme dans une zone où le second pic (P2) apparaît seulement après le moment du premier pic (P1).

4. Dispositif de mesure d'objet cible (1) selon l'une quelconque des revendications précédentes, le module de mesure d'objet cible (36) calculant les données relatives à la taille et/ou au poids de l'objet cible sur la base d'une différence de temps correspondant à un mode (91) apparaissant dans l'histogramme.

5. Dispositif de mesure d'objet cible (1) selon l'une quelconque des revendications 1 à 3, le module de mesure d'objet cible (36) calculant les données relatives à la taille et/ou au poids de l'objet cible sur la base d'une différence de temps correspondant à une limite (93) apparaissant dans l'histogramme.

6. Dispositif de mesure d'objet cible (1) selon les revendications précédentes, le transducteur (11) comportant quatre canaux de réception ou plus pour recevoir l'onde de réflexion, et
le module de calcul de direction entrante de pics (34) calculant la direction entrante sur la base d'une différence entre les moments où les canaux de réception reçoivent l'onde de réflexion.

7. Dispositif de mesure d'objet cible (1) selon l'une quelconque des revendications 1 à 5, le transducteur (11) comportant deux canaux de réception pour recevoir l'onde de réflexion, et
le module de calcul de direction entrante de pics (34) calculant la direction entrante sur la base d'une différence entre les intensités de l'onde de réflexion reçue par les canaux de réception.

8. Dispositif de mesure d'objet cible (1) selon les revendications précédentes, l'objet cible étant un poisson élevé dans une pisciculture.

9. Dispositif de mesure d'objet cible (1) selon la revendication 8, le module de mesure d'objet cible (36) calculant les données relatives à au moins un élément parmi une hauteur de poisson, une longueur de poisson, une largeur de poisson et un poids de poisson.

10. Procédé de mesure d'un objet cible, comprenant les étapes consistant à :
émettre (S101) une onde d'émission sous-marine ;
recevoir (S102) une onde de réflexion ;
extraire (S103), de données de l'onde de réflexion, un signal d'écho indiquant un objet cible ;
détecter (S104) chaque pic d'une pluralité de pics (P1, P2) compris dans le signal d'écho ;
calculer (S105) une direction entrante de chaque pic de la pluralité de pics (P1, P2), sur la base de l'onde de réflexion ;
**caractérisé par** les étapes consistant à :
calculer (S106) une différence de temps entre un moment d'apparition d'un premier pic (P1) et d'un second pic (P2) différent du premier pic (P1), parmi la pluralité de pics (P1, P2), une différence dans la direction entrante entre le premier pic (P1) et le second pic (P2) étant inférieure à un seuil donné ;
générer un histogramme sur la base de la différence de temps calculée pour une pluralité des signaux d'écho ; et
calculer (S107) des données relatives à une taille et/ou à un poids de l'objet cible, sur la base de l'histogramme.
